# EUROPÄISCHE PATENTANMELDUNG

(11) **EP 0 901 940 A2**
(43) Veröffentlichungstag der Anmeldung: **17.03.1999**
(21) Anmeldenummer: 98115347.1
(22) Anmeldetag: 14.08.1998
(51) Int. Cl.: B60R 21/16

(54) **Verfahren zur Herstellung eines Luftsacks**

(30) Priorität: 09.09.1997 DE 19739558
(71) Anmelder: TAKATA (EUROPE) VEHICLE SAFETY TECHNOLOGY GmbH, 89081 Ulm (DE)
(72) Erfinder: Heudorfer, Benedikt, 89278 Nersingen (DE); Glöckler, Oliver, 89278 Nehrsingen (DE); Einsiedel, Heinrich, 89073 Ulm (DE); Klaiber, Uwe, 89518 Heidenheim (DE)
(74) Vertreter: Finsterwald, Martin, Dr.

(57) **Zusammenfassung**

Die Erfindung betrifft ein Verfahren zur Herstellung eines Luftsacks, der aus mehreren Luftsackteilen besteht und eine Luftsackhülle aufweist. Bei dem Verfahren wird wenigstens ein Luftsackteil zumindest bereichsweise mit einer Polyurethan-Beschichtung versehen, durch deren Erhitzung der Luftsackteil mit einem weiteren Luftsackteil verschweißt wird.

## Beschreibung

Die Erfindung betrifft ein Verfahren zur Herstellung eines Luftsacks, der aus mehreren Luftsackteilen besteht und eine Luftsackhülle aufweist.

Derartige Luftsäcke dienen als Sicherheitsvorrichtung für Fahrer und Passagiere in Kraftfahrzeugen. Falls ein Verzögerungssensor einen Aufprall des Kraftfahrzeugs oder einen Anprall eines Objekts am Kraftfahrzeug detektiert, bewirkt ein zugeordneter Gasgenerator ein Aufblasen des Luftsacks, so daß der aufgeblasene Luftsack resultierende Bewegungen der Fahrzeuginsassen abfängt bzw. die Fahrzeuginsassen vor einem in das Fahrzeug eindringenden Objekt schützt. Zur Herstellung eines derartigen Luftsacks werden mehrere Teile desselben beispielsweise durch Vernähen oder Verkleben miteinander verbunden. Die Verbindung der Luftsackteile muß dabei fest genug sein, um einem ruckartigen Aufblasen durch den Gasgenerator oder einer zusätzlichen Druckbelastung durch den Anprall eines Objekts standhalten zu können. Die die eigentliche aufzublasende Luftsackhülle bildenden Teile sowie deren Verbindungsstellen müssen ausreichend dicht sein gegenüber den vom Gasgenerator abgegebenen Gas. Um diese Anforderungen mit hoher Zuverlässigkeit zu erfüllen, sind bekannte Luftsack-Herstellungsverfahren vergleichsweise aufwendig und entsprechend teuer.

Es ist eine Aufgabe der Erfindung, ein Verfahren der eingangs genannten Art hervorzubringen, das einfach und zuverlässig durchzuführen ist und die Festigkeit und die Gasdichtheit der Verbindungsstellen der Luftsackteile mit hoher Sicherheit gewährleistet und durch das ein Luftsack geschaffen wird, der gegenüber bekannten Luftsäcken die Sicherheit der Fahrzeuginsassen noch weiter erhöht.

Diese Aufgabe wird erfindungsgemäß dadurch gelöst, daß zur Herstellung des Luftsacks während einer Vorbereitungsstufe ein erster Luftsackteil zumindest an einem Befestigungsabschnitt mit einer Polyurethan-Beschichtung versehen wird, und daß während einer Verarbeitungsstufe der Befestigungsabschnitt des ersten Luftsackteils mit einem Verbindungsabschnitt eines zweiten Luftsackteils in Kontakt gebracht wird und der erste Luftsackteil durch Erwärmung der Polyurethan-Beschichtung seines Befestigungsabschnitts mit dem zweiten Luftsackteil entlang dessen Verbindungsabschnitts verbunden wird.

Erfindungsgemäß ist es zum Herstellen einer Verbindung von zwei Luftsackteilen miteinander lediglich notwendig, den ersten Luftsackteil zumindest an einem Befestigungsabschnitt mit Polyurethan (PU) zu beschichten, den zweiten Luftsackteil an dieser Beschichtung bzw. dem ersten Luftsackteil auszurichten und die PU-Schicht zu erhitzen, so daß die beiden Luftsackteile entlang des Befestigungsabschnitts miteinander verschweißt sind. Diese Verbindung der beiden Teile entlang des Befestigungsabschnitts erweist sich im wesentlichen als gasdicht sowie ausreichend zug- und reißfest. Somit entfällt die Notwendigkeit, an dem Befestigungsabschnitt des ersten Luftsackteils ein Klebe- oder Bindemittel anzubringen, das mit dem zweiten Luftsackteil lediglich an dem Verbindungsabschnitt in Kontakt gebracht werden darf. Auch ist es nicht erforderlich, zwei zu verbindende Luftsackteile miteinander zu vernähen oder entsprechende Nahtstellen gasdicht zu versiegeln. Das erfindungsgemäße Verfahren ist vorteilhaft auf alle miteinander zu verbindende Teile des Luftsacks anzuwenden, auch wenn im folgenden nur zwei oder drei Luftsackteile benannt und definiert werden.

Es ist möglich, daß der genannte erste Luftsackteil und der genannte zweite Luftsackteil jeweils als ein Abschnitt der eigentlichen Luftsackhülle ausgebildet sind, so daß durch das erfindungsgemäße Verfahren zwei Abschnitte der Luftsackhülle miteinander verbunden werden. Es ist weiterhin von Vorteil, wenn ein einziger Hüllenabschnitt aus zwei Luftsackteilen besteht, die durch das erfindungsgemäße Verfahren miteinander verbunden werden. Beispielsweise kann dieser Luftsackhüllenabschnitt derart gefaltet werden, daß die beiden Luftsackteile übereinander zu liegen kommen. In diesem Fall ist eine Verbindungsstelle der beiden Luftsackteile bereits durch den Falz des Hüllenabschnitts gegeben.

Alternativ ist es möglich, daß der genannte erste Luftsackteil als ein Verbindungsband und der genannte zweite Luftsackteil als ein Abschnitt der Luftsackhülle ausgebildet ist. Dieses Verbindungsband kann dafür vorgesehen sein, im Innenraum des fertigen Luftsacks zu verlaufen, beispielsweise um den aufgeblasenen Luftsack in seiner Form oder seiner Ausrichtung zu stabilisieren. Besonders bei Seiten-Luftsäcken, die in aufgeblasenem Zustand ein Position zwischen einem Passagier und der Fahrzeug-Seitenwand einnehmen sollen, kann innerhalb des Luftsacks ein Verbindungsband vorgesehen sein, das den dem Passagier zugewandten Luftsackhüllenabschnitt mit dem der Seitenwand zugewandten Luftsackhüllenabschnitt entlang der Längsrichtung des Luftsacks verbindet. Hierdurch kann die Breite des Luftsacks, also der Abstand der beiden genannten Luftsackhüllenabschnitte begrenzt werden.

Bei dieser Ausführungsform der Erfindung ist es bevorzugt, das Verbindungsband simultan zu seiner Verbindung mit dem genannten Luftsackhüllenabschnitt mit einem dritten Luftsackteil, insbesondere einem weiteren Abschnitt der Luftsackhülle, zu verbinden, so daß das Verbindungsband nach Beendigung des Verfahrens zwischen den genannten Luftsackhüllenabschnitt und dem dritten Luftsackteil verbunden ist. Hierfür wird während der Vorbereitungsstufe das Verbindungsband an einem weiteren Befestigungsabschnitt mit PU beschichtet, und dieser weitere Befestigungsabschnitt wird während der Verarbeitungsstufe mit einem Verbindungsabschnitt des dritten Luftsackteils in Kontakt gebracht und erhitzt, um eine Verbindung zwischen diesem Befestigungsabschnitt und dem Verbindungsabschnitt des dritten Luftsackteils herzustellen. Es ist auch bei dieser Ausführungsform der Erfindung möglich, den zweiten Luftsackteil und den dritten Luftsackteil als Teile eines einzigen Abschnitts der Luftsackhülle vorzusehen, beispielsweise um das Verbindungsband zwischen den zwei Teilen des gefaltenen Luftsackhüllenabschnitts anzubringen.

Das Verbindungsband kann als Schlauch ausgeführt sein, so daß es einen im wesentlichen runden Querschnitt aufweist. Hierbei ist es von Vorteil, wenn die jeweils als Befestigungsabschnitt vorgesehene Beschichtung sich der Länge des Verbindungsbands nach an zwei einander gegenüberstehenden Außenseiten des Schlauchs erstreckt. In Abhängigkeit von der vorgesehenen Bauart des Luftsacks kann es vorteilhaft sein, daß das schlauchförmige Verbindungsband an seinen Längsenden geschlossen oder offen ist, wobei es insbesondere möglich ist, die beiden Längsenden an ihrer Innenseite mit einer PU-Beschichtung zu versehen und im Verlauf der Verarbeitungsstufe derart in sich zu verbinden, daß sie geschlossen sind.

Weiterhin ist es möglich, daß das Verbindungsband einen im wesentlichen U-förmigen Querschnitt aufweist. In diesem Fall kann sich die jeweils als Befestigungsabschnitt vorgesehene PU-Beschichtung an den Außenseiten der Schenkel der U-Form über die Länge des Verbindungsbandes erstrekken.

Schließlich ist es auch möglich, daß Verbindungsband als ein flaches Band auszubilden, bei dem beide Seiten jeweils als Befestigungsabschnitt mit PU beschichtet sind.

Bei dem erfindungsgemäßen Verfahren ist es grundsätzlich ausreichend, den als Befestigungsabschnitt bezeichneten Bereich des ersten Luftsackteils mit Polyurethan zu beschichten, um den ersten Luftsackteil durch Erhitzen dieser Beschichtung entlang des Befestigungsabschnitts mit einem weiteren Luftsackteil fest zu verbinden. An dem weiteren Luftsackteil wird die Verbindung entlang eines Abschnitts hergestellt, der vorstehend als Verbindungsabschnitt bezeichnet wurde, jedoch keiner besonderen baulichen Ausgestaltung oder Behandlung bedarf.

Im Rahmen der Erfindung ist es bevorzugt, auch andere Bereiche der genannten Luftsackteile als den Befestigungsabschnitt des ersten Luftsackteils mit einer Polyurethan-Beschichtung zu versehen. Insbesondere können der zweite Luftsackteil und ggf. der dritte Luftsackteil jeweils an ihrem als Verbindungsabschnitt bezeichneten Bereich beschichtet werden, so daß während der Verarbeitungsstufe ein beschichteter Befestigungsabschnitt mit einem beschichteten Verbindungsabschnitt verschweißt wird. Dadurch wird eine noch höhere Festigkeit der Verbindung erreicht.

Falls die Luftsackteile während der Vorbereitungsstufe derart mit PU beschichtet werden, daß die gesamte Innenseite der fertig hergestellten Luftsackhülle eine PU-Beschichtung aufweist, wird durch das erfindungsgemäße Verfahren nicht nur eine Verbindung der Luftsackteile hergestellt, sondern auch die Gasdichtheit des gesamten Luftsacks an sowie zwischen den Verbindungsabschnitten gewährleistet.

Es ist bevorzugt, wenn die Luftsackteile während der Vorbereitungsstufe zumindest an einer Seite, und zwar der den Befestigungsabschnitt bzw. den Verbindungsabschnitt aufweisenden Seite, ganzflächig mit PU beschichtet werden. Dadurch lassen sich die Luftsackteile zu einem gasdichten Luftsack verbinden, wobei die ganzflächige Beschichtung während der Vorbereitungsstufe auf besonders einfache Weise erfolgen kann.

Die Erwärmung der PU-Schicht, die sich während der Verarbeitungsstufe zwischen einem Befestigungsabschnitt und einem Verbindungsabschnitt befindet, kann durch direkten Wärmeübertrag erfolgen, beispielsweise indem eine Heizquelle in Kontakt mit dem Befestigungsabschnitt, dem Verbindungsabschnitt oder dem hieran anliegenden Luftsackteil gebracht wird, so daß durch Wärmeleitung oder in Form von Strahlung Wärme von der Heizquelle auf die PU-Schicht oder Bereiche hiervon übertragen wird. Es ist auch möglich, die PU-Schicht durch Ultraschallwellen oder hochfrequente elektrische Wechselfelder (dielektrische Erwärmung) zu erhitzen; hierdurch ist eine berührungsfreie und zielgerichtete Erwärmung möglich.

Es ist von Vorteil, wenn während der Verarbeitungstufe Druck auf den ersten und den zweiten Luftsackteil sowie gegebenenfalls den dritten Luftsackteil ausgeübt wird. Insbesondere wenn die PU-Schicht lediglich an den Befestigungsabschnitten oder den Verbindungsabschnitten angebracht ist, kann der Druck auf einfache Weise großflächig über die Befestigungsabschnitte bzw. die Verbindungsabschnitte hinaus angewandt werden. Falls weitere Bereiche der Luftsackteile mit PU beschichtet sind, ist es bevorzugt, den Druck lediglich entlang der Verbindungsabschnitte auszuüben.

Die Luftsackteile sind vorzugsweise aus einem synthetischen Gewebematerial hergestellt, wie beispielsweise Polyamid, Nylon PA 66, Nylon PA 46 oder Polyester.

Die Erfindung betrifft auch einen Luftsack, der nach einem der vorstehend beschriebenen Verfahren hergestellt ist.

Insbesondere ein nach einem der vorstehend beschriebenen Verfahren hergestellter Luftsack oder seine Hülle kann zwei Teile aufweisen, die entlang mehrerer Verbindungsabschnitte miteinander verbunden sind, welche zumindest bereichsweise im wesentlichen parallel zueinander und in einem Abstand voneinander verlaufen. Dabei ist es möglich, die parallel verlaufenden Verbindungsabschnitte unterschiedlich breit vorzusehen. Dadurch kann ein schmaler Verbindungsabschnitt als Soll-Reißnaht fungieren, während die Breite eines benachbarten parallelen Verbindungsabschnitts so dimensioniert ist, daß dieser auch hohen Belastungen standhält.

Durch eine derartige Ausgestaltung eines Luftsacks mit einem Reißnaht-Verbindungsabschnitt läßt sich somit eine gesteuerte Volumenvergrößerung des aufgeblasenen Luftsacks erzielen, um beispielsweise im Falle eines zu hohen Gasdrucks innerhalb des Luftsacks oder einer hohen Druckbelastung von außen durch einen aufprallenden Passagier oder Gegenstand dem unbeabsichtigten Aufreißen der Luftsackhülle oder einer Verbindungsstelle zwischen Teilen des Luftsacks vorzubeugen. Eine Ausgestaltung eines Luftsacks mit einer derartigen Soll-Reißnaht ist auch vorteilhaft, wenn der Luftsack durch ein anderes als das erfindungsgemäße Verfahren hergestellt wird, beispielsweise durch Vernähen der Luftsackteile.

Die zwei parallelen Verbindungsabschnitte oder ein einzelner Verbindungsabschnitt eines erfindungsgemäß hergestellten Luftsacks können entlang einer geschlossenen Bahn verlaufen, beispielsweise in der Form eines Kreises oder eines Vierecks. Durch einen derartigen geschlossenen Verbindungsabschnitt ist es möglich, einen Flächenbereich zweier miteinander verbundenen Luftsackteile gasdicht abzuschließen, so daß beim Aufblasen des fertig hergestellten Luftsacks kein Gas in diesen Bereich strömen kann. Dieser Bereich des Luftsacks kann als Fangfläche dienen, durch die Insassen oder Objekte innerhalb des Fahrzeugs aufgefangen werden oder die Zugspannungen zwischen zwei benachbarten aufgeblasenen Bereichen des Luftsacks überträgt, ohne hierfür ein eigenes Gasvolumen zu beanspruchen.

Ein erfindungsgemäßer Luftsack ist weiterhin dadurch gekennzeichnet, daß zwei Luftsackteile entlang eines Verbindungsabschnitts miteinander verbunden sind, welcher im wesentlichen die Form eines Knochens oder eines Teils hiervon besitzt. Bei einer derartigen Formgebung verläuft die Kontur des Verbindungsabschnitts stets in großen Krümmungsradien. Ein länglicher Verbindungsabschnitt endet also nicht spitz, eckig oder stark gekrümmt, sondern verbreitert sich zu einem im wesentlichen kreisförmigen Abschluß seines Längsendes. Der Radius dieses Kreises ist dabei beispielsweise doppelt so groß wie die Breite des restlichen länglichen Verbindungsabschnitts. Hierdurch werden an dem Verbindungsabschnitt wirkende Zug- und Reißkräfte vermindert bzw. umgelenkt und verteilt, so daß ein Einreißen der verbundenen Luftsackteile oder der Schweißverbindung wirksam verhindert wird.

Durch die Ausgestaltung eines Luftsacks mit knochen- oder teilknochenförmigen Verbindungsabschnitten kann eine Segmentierung des Luftsacks in Kammern bewirkt werden, beispielsweise um ein unerwünschtes Aufblähen einer länglichen Luftsackform zu verhindern. Eine Ausgestaltung eines Luftsacks mit Verbindungsabschnitten in der Form eines halben Knochens ist von Vorteil, wenn eine derartige Segmentierung nahe einer Berandung des Luftsacks erfolgen soll. In diesem Fall ragt der Verbindungsabschnitt mit seinem Ende in Form eines Knochenkopfes in Richtung des Zentrums des Luftsacks, während sein gegenüberliegendes Ende in der Luftsackberandung mündet.

Weitere bevorzugte Ausführungsformen sind in den Unteransprüchen beschrieben. Die Erfindung wird nachfolgend anhand von Ausführungsbeispielen unter Bezugnahme auf die Zeichnungen beschrieben; in diesen zeigen:
- Fig. 1a und 1b: schematische Perspektivansichten zweier zu verbindender bzw. verbundener Luftsackteile,
- Fig. 2a, 2b und 2c: schematische Schnittdarstellungen zweier zu verbindender Luftsackhüllenabschnitte, zwischen denen jeweils ein Verbindungsband angeordnet ist, das einen kreisförmigen bzw. U-förmigen bzw. flachen Querschnitt aufweist,
- Fig. 3: eine schematische Schnittdarstellung zweier Luftsackteile mit mehreren parallel zueinander verlaufenden Verbindungs- und Befestigungsabschnitten,
- Fig. 4: eine schematische Perspektivansicht zweier Luftsackteile mit einem rechteckigen Befestigungsabschnitt, und
- Fig. 5a und 5b: schematische Perspektivansichten zweier Luftsackteile mit Befestigungsabschnitten in Form eines Knochens bzw. eines halben Knochens.

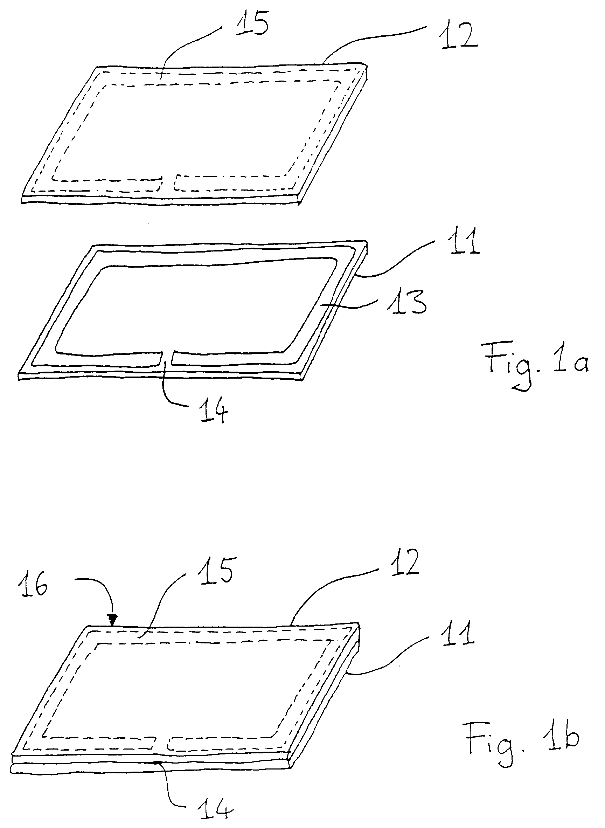

Die Fig. 1a und 1b zeigen schematisch einen ersten Luftsackteil 11 und einen zweiten Luftsackteil 12, die als gleich große, flache, rechteckige Abschnitte der Hülle des herzustellenden Luftsacks ausgebildet sind. Fig. 1a zeigt, wie der zweite Luftsackteil 12 nach Beendigung der Vorbereitungsstufe über dem ersten Luftsackteil 11 angeordnet ist. In Fig. 1b ist dargestellt, wie die beiden Luftsackteile 11, 12 während der Bearbeitungsstufe aneinander anliegen.

Der untere Luftsackteil 11 besitzt an seiner Oberseite einen Befestigungsabschnitt 13, der sich entlang der Randbereiche des Luftsackteils 11 erstreckt. In Richtung der Mitte des Luftsackteils 11 besitzt der Befestigungsabschnitt 13 jeweils eine Ausdehnung, die wesentlich geringer ist als die Ausdehnung des Luftsackteils 11 in dieser Richtung. Der Befestigungsabschnitt 13 ist bis auf eine in Richtung des Betrachters weisende Aufblasöffnung 14 geschlossen.

Der obere Luftsackteil 12 weist an seiner Unterseite einen Verbindungsabschnitt 15 auf, der dieselbe Form und Ausdehnung besitzt wie der ihm zugewandte Befestigungsabschnitt 13. In den Fig. 1a und 1b ist der Verbindungsabschnitt 15 gestrichelt angedeutet.

Zur erfindungsgemäßen Herstellung eines die beiden Luftsackteile 11, 12 aufweisenden Luftsacks wird der untere Luftsackteil 11 an dem Befestigungsabschnitt 13 zunächst mit einer Polyurethan-Beschichtung versehen. Anschließend werden die beiden Teile 11, 12, wie in Fig. 1b dargestellt, derart aneinandergelegt, daß der Verbindungsabschnitt 15 an dem Befestigungsabschnitt 13 anliegt. Daraufhin wird die PU-Beschichtung erwärmt, so daß die beiden Luftsackteile 11, 12 entlang des Befestigungsabschnitts 13 bzw. des Verbindungsabschnitts 15 miteinander verbunden sind. Dadurch wird von den beiden Luftsackteilen 11, 12 entlang des Befestigungsabschnitts 13 ein über die Aufblasöffnung aufblasbarer Volumenbereich eingeschlossen. Das Verschweißen der beiden Luftsackteile 11, 12 kann beispielsweise auf einfache Weise durch flächiges Heißverpressen erfolgen.

Erfindungsgemäß ist es auch möglich, den oberen Luftsackteil 12 während der Vorbereitungsstufe an seinem Verbindungsabschnitt 15 mit einer PU-Beschichtung zu versehen und ihn anschließend während der Verarbeitungsstufe auf die genannte Weise mit dem unteren Luftsackteil 11 zu verschweißen. Dadurch läßt sich die Festigkeit der Verbindung noch weiter erhöhen.

Weiterhin ist es im Rahmen der Erfindung möglich, die gesamte Oberseite des unteren Luftsackteils 11 und/oder die gesamte Unterseite des oberen Luftsackteils 12 während der Vorbereitungsstufe zu beschichten. Während der Verarbeitungsstufe wird die PU-Beschichtung in diesem Fall lediglich entlang des Befestigungsabschnitts 13 bzw. des Verbindungsabschnitts 15 zur Verschweißung der Teile 11, 12 erhitzt.

Schließlich können die beiden Luftsackteile 11, 12 auch als Teile eines einzigen Abschnitts der Hülle des herzustellenden Luftsacks vorgesehen sein, indem sie an ihrer Rückseite 16 über einen Falz miteinander verbunden sind. In diesem Fall kann die PU-Beschichtung während der Vorbereitungsstufe ganzflächig auf einer Seite des Abschnitts angebracht werden. Während der Verarbeitungsstufe wird dann der eine Teil 12 über den anderen Teil 11 des Abschnitts derart gefaltet, daß sich die PU-Schicht an der Innenseite des Falzes befindet. Anschließend wird die PU-Schicht wie vorstehend beschrieben entlang des Befestigungsabschnitts 13 erwärmt.

Die Fig. 2a, 2b und 2c zeigen jeweils schematisch einen Teil eines Schnitts durch drei Luftsackteile 21, 22, 23. Dabei ist der erste Luftsackteil 21 jeweils als Verbindungsband ausgebildet, das sich senkrecht zur Papierebene erstreckt. Der zweite Luftsackteil 22 und der dritte Luftsackteil 23 sind jeweils flächig, als Abschnitt der Hülle des herzustellenden Luftsacks ausgestaltet und besitzen ebenfalls eine Ausdehnung senkrecht zur Papierebene.

Das in Fig. 2a dargestellte Verbindungsband 21 besitzt einen ringförmigen Querschnitt. Der Querschnitt des in Fig. 2b gezeigten Verbindungsbandes 21 besitzt die Form eines U, dessen Schenkel parallel zu der vertikalen Ausdehnung des dargestellten Schnitts der beiden Luftsackteile 22, 23 weisen. Der Querschnitt des in Fig. 2c dargestellten, als flaches Band ausgebildeten Verbindungsbands 21 verläuft parallel zur vertikalen Ausdehnung der beiden Luftsackteile 22, 23.

Das in den Fig. 2a, 2b und 2c jeweils dargestellte Verbindungsband 21 besitzt an seiner dem zweiten, rechten Luftsackteil 22 zugewandten Außenseite einen Befestigungsabschnitt 24. Der Luftsackteil 22 weist an seiner dem Verbindungsband 21 zugewandten Seite, entlang des dem Verbindungsband 21 benachbarten Bereichs einen Verbindungsabschnitt 25 auf. Symmetrisch hierzu weisen das Verbindungsband 21 und der dritte, linke Luftsackteil 23 jeweils an ihrem einander zugewandten Bereich einen weiteren Befestigungsabschnitt 26 bzw. einen Verbindungsabschnitt 27 auf. Die Befestigungsabschnitte 24, 25 und die Verbindungsabschnitte 26, 27 erstrecken sich entlang des Verbindungsbands 21 in einer Richtung senkrecht zur Papierebene.

Die in den Fig. 2a, 2b und 2c dargestellten Verbindungsbänder 21 dienen zur beabstandeten und bereichsweisen Verbindung der beiden Luftsackhüllenabschnitte 22, 23. Die beiden Befestigungsabschnitte 24, 26 eines Verbindungsbands 21 werden hierfür während der Vorbereitungsstufe mit einer Polyurethan-Beschichtung versehen. Während der Verarbeitungsstufe werden die Luftsackteile 22, 23 mit ihren Verbindungsabschnitten 25, 27 an den Befestigungsabschnitt 24 bzw. 26 des Verbindungsbands 21 angelegt und mit diesem durch Erwärmung der PU-Beschichtung verbunden. Dadurch sind die Luftsackhüllenabschnitte 22, 23 entlang ihrer Verbindungsabschnitte 25, 27 über das Verbindungsband 21 miteinander verbunden. Dem Verbindungsband 21 nach oben und nach unten benachbart können sich somit von den Luftsackhüllenabschnitten 22, 23 umgebene, aufblasbare Volumenbereiche 28 anschließen.

Das erfindungsgemäße Verfahren wird noch weiter vereinfacht, wenn die gesamte Außenseite des jeweiligen Verbindungsbands 21 mit einer PU-Beschichtung versehen wird, so daß keine Unterscheidung eines separaten Befestigungsabschnitts 24, 26 notwendig ist. Gleichermaßen kann die gesamte dem Verbindungsband 21 zugewandte Seite des Luftsackteils 22 bzw. 23 während der Vorbereitungsstufe der PU-Beschichtung versehen werden.

Die Verwendung des in Fig. 2c gezeigten flachen Verbindungsbands 21 besitzt gegenüber einer Verbindung der beiden Luftsackteile 22, 23 ohne dazwischenliegendem Verbindungsband 21 den Vorteil, daß bei Beschichtung lediglich der Befestigungsabschnitte 24, 26 die Lage der Verbindungsabschnitte 25, 27 durch entsprechende Positionierung des Verbindungsbands 21 zwischen den beiden Luftsackteilen 21, 22 frei gewählt werden kann.

In Fig. 3 ist schematisch ein Schnitt durch die Hülle eines herzustellenden Luftsacks gezeigt. Die Hülle ist einstückig und läßt sich in einen rechten, ersten Luftsackteil 31 und einen hierzu spiegelsymmetrischen linken, zweiten Luftsackteil 32 unterteilen. Die beiden Luftsackteile 31, 32 sind einander benachbart, beabstandet voneinander angeordnet und gehen an der Unterseite ihrer in Fig. 3 dargestellten Anordnung ineinander über. Sie erstrecken sich senkrecht zur Papierebene.

An der Innenseite der herzustellenden Luftsackhülle, also an der dem linken Teil 32 zugewandten Seite des rechten Teils 31 und der dem rechten Teil 31 zugewandten Seite des linken Teils 32, wechseln sich zur gegenseitigen Verbindung vorgesehene Befestigungsabschnitte 33, 33' bzw. Verbindungsabschnitte 34, 34' mit Volumenabschnitten 35, 35', 35'' ab, an denen keine Verbindung der beiden Teile 31, 32 erfolgen soll:

An der Oberseite des dargestellten rechten Hüllenteils 31, der Öffnung des gezeigten Querschnitts benachbart, erstreckt sich ein erster breiter Befestigungsabschnitt 33. Diesem ersten Befestigungsabschnitt 33 ist nach unten ein Volumenabschnitt 35 benachbart, an dem der rechte Luftsackteil 31 nicht zur Verbindung an dem gegenüberstehenden Teil 32 vorgesehen ist und dessen Breite ein Mehrfaches des ersten Befestigungsabschnitts 33 beträgt. Dieser Volumenabschnitt 35 ist nach außen gewölbt, so daß er eine Hälfte eines zwischen den beiden Hüllenteilen 31, 32 befindlichen oberen Volumenbereichs 36 eines im wesentlichen runden Querschnitts begrenzt.

An den Volumenabschnitt 35 schließen sich drei zueinander parallele Befestigungsabschnitte 33' an, von denen der mittlere ungefähr die Breite des genannten ersten Befestigungsabschnitts 33 und die beiden äußeren eine geringere Breite aufweisen, und die durch zwei schmale Volumenabschnitte 35' voneinander getrennt sind. In Richtung des linken Hüllenteils 32 begrenzen die beiden Volumenabschnitte 35' jeweils einen Ersatz-Volumenbereich 36' einer geringeren Querschnittsfläche als der obere Volumenbereich 36.

Unterhalb des unteren äußeren Befestigungsabschnitts 33' schließt sich ein unterer Volumenabschnitt 35'' an, der einen unteren Volumenbereich 36'' umgibt, welcher einen im wesentlichen runden Querschnitt von der Fläche ähnlich des oberen Volumenbereichs 36 aufweist.

An dem linken Luftsackteil 32 verlaufen Verbindungsabschnitte 34 bzw. 34' symmetrisch zu den Befestigungsabschnitten 33, 33' des rechten Teils 31 sowie Volumenabschnitte 35, 35', 35'' symmetrisch zu den Volumenabschnitten 35, 35', 35'' des rechten Teils 31. An der Verbindung der beiden Teile 31, 32 geht dabei der untere Volumenabschnitt 35'' des rechten Teils 31in den unteren Volumenabschnitt 35'' des linken Teils 32 über.

Die Befestigungsabschnitte 33, 33', die Verbindungsabschnitte 34, 34', die Volumenabschnitte 35, 35', 35'' und die Volumenbereiche 36, 36', 36'' erstrecken sich, wie die beiden Hüllenteile 31, 32, in einer Richtung senkrecht zur Papierebene.

Fig. 3 zeigt den Anfangszustand der Verarbeitungsstufe des erfindungsgemäßen Herstellungsverfahrens: Die dargestellte Luftsackhülle ist bereits an ihrer gesamten Innenseite mit Polyurethan beschichtet. Ihr rechter Teil 31 wird entlang der Befestigungsabschnitte 33 mit den Verbindungsabschnitten 34 des linken Teils 32 in Kontakt gebracht. Anschließend werden die Befestigungsabschnitte 33 und die Verbindungsabschnitte 34 erhitzt, so daß sie miteinander verschweißt werden. Auch an den beiden in Fig. 3 nicht dargestellten, in den beiden Richtungen senkrecht zur Papierebene gelegenen Enden werden die beiden Teile 31, 32 miteinander verbunden, wobei lediglich je eine Öffnung zum Aufblasen des oberen Volumenbereichs 36 und des unteren Volumenbereichs 36'' vorgesehen ist.

Im fertig hergestellten und aufgeblasenen Zustand besitzt der gezeigte Luftsack einen Querschnitt ähnlich der Darstellung in Fig. 3. Der obere Volumenbereich 36 und der untere Volumenbereich 36'' dienen dabei zum Schutz von Passagieren eines Kraftfahrzeugs. Die Verbindung der beiden Teile 31, 32 entlang des mittleren der drei parallelen Befestigungsabschnitte 33' bewirkt eine Unterteilung in einen oberen und unteren Volumenbereich 36 bzw. 36'' und somit eine Begrenzung der Breite des aufgeblasenen Gesamtvolumens.

Durch die beiden schmalen äußeren Befestigungsabschnitte 33' kann eine gezielte Vergrößerung des Volumens des oberen 36 bzw. unteren Volumenbereichs 36'' herbeigeführt werden: Falls der Gasdruck innerhalb eines der genannten Bereiche 36, 36'' unerwünscht einen bestimmtem Wert überschreitet, reißt die Verbindung an dem entsprechenden Befestigungsabschnitt 33' auf. Dadurch steht zusätzlich jeweils das Volumen eines Ersatz-Volumenbereichs 35' zum Abbau des Gasdrucks zur Verfügung. Dieser zusätzliche Sicherheitseffekt kann auch dadurch erreicht werden, daß die beiden Teile 31, 32 an den äußeren Befestigungsabschnitten 33' weniger stark verschweißt werden, beispielsweise indem lediglich der jeweilige Befestigungsabschnitt 33', nicht aber der zugehörige Verbindungsabschnitt 34' mit PU beschichtet wird.

Fig. 4 zeigt schematisch einen ersten Luftsackteil 41 mit einem dahinter angeordneten zweiten Luftsackteil 42. Beide Teile sind als rechteckige, ungefähr gleich große Abschnitte einer Luftsackhülle ausgebildet. Der vordere Luftsackteil 41 besitzt an seiner dem hinteren Luftsackteil 42 zugewandten Seite einen entlang seines Randbereichs verlaufenden Befestigungsabschnitt 43 sowie einen weiteren Befestigungsabschnitt 44 in seinem Innenbereich in Form eines geschlossenen viereckigen Rings. Diese beiden Befestigungsabschnitte 44, 44' sind in Fig. 4 gestrichelt dargestellt. Der hintere Luftsackteil 42 weist an seiner dem vorderen Teil 41 zugewandten Seite in Fig. 4 nicht sichtbare Verbindungsabschnitte derselben Form wie die beiden Befestigungsabschnitte 44, 44' auf.

Durch das erfindungsgemäße Verfahren werden die beiden Luftsackteile 41, 42 entlang der Befestigungsabschnitte 43, 44. Durch Aufblasen des von den beiden Befestigungsabschnitten 43, 44 umgebenen Bereichs zwischen den beiden Teilen 41 durch eine in Fig. 4 nicht dargestellte Aufblasöffnung entsteht ein aufgeblasener Luftsack, der einen durch den Befestigungsabschnitt 44 begrenzten, nichtaufgeblasenen Flächenbereich 45 umgibt. Dieser begrenzte Bereich 45 kann als Fangfläche für Passagiere innerhalb eines Kraftfahrzeugs oder für in ein Fahrzeug eindringende Objekte dienen.

Die Herstellung eines derartigen Luftsacks mit einer durch den Befestigungsabschnitt 44 begrenzten Fangfläche 45 ist durch das erfindungsgemäße Verfahren besonders einfach, da die Verbindung entlang des Befestigungsabschnitts 44 simultan zu der weiteren Verbindung der beiden Teile 41, 42 entlang des Befestigungsabschnitts 43 erfolgen kann. Dabei ist es insbesondere möglich, den gesamten von dem Befestigungsabschnitt 44 begrenzten Bereich 45 als Verbindungsfläche vorzusehen.

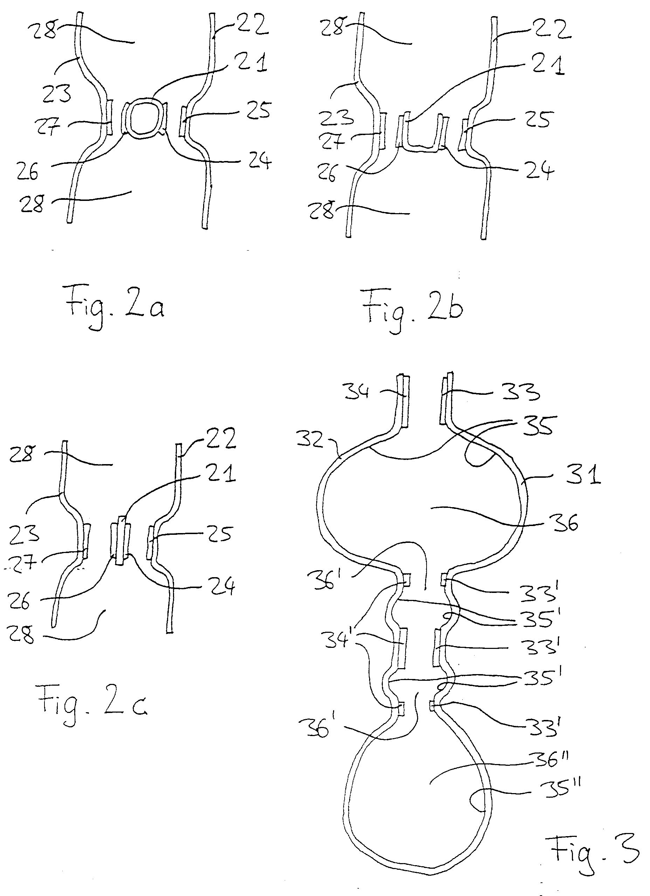

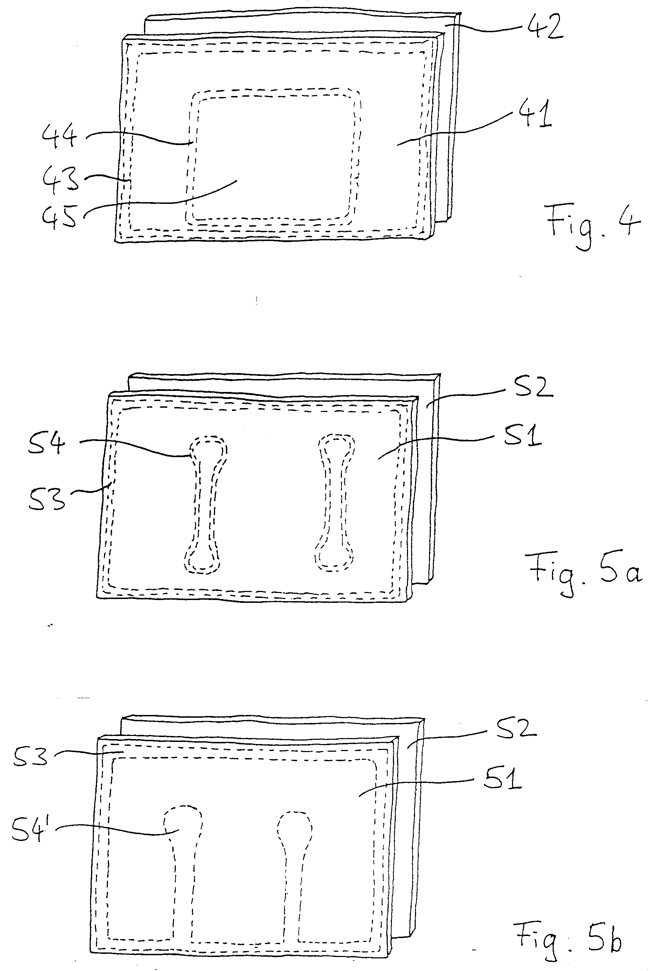

In den Fig. 5a und 5b sind jeweils ein vorderer und ein hinterer Luftsackteil 51 bzw. 52 dargestellt, die jeweils als ein rechteckiger Abschnitt einer Luftsackhülle ausgebildet sind. Die beiden Teile 51, 52 werden unter anderem entlang eines Befestigungsabschnitts 53 miteinander verbunden, der entlang des Randbereichs der dem hinteren Teil 52 zugewandten Seite des vorderen Teils 51 verläuft und eine geringe seitliche Ausdehnung besitzt. In den Fig. 5a und 5b ist der Befestigungsabschnitt 53 gestrichelt dargestellt. Zum Aufblasen des resultierenden Luftsacks ist eine in den Fig. 5a und 5b nicht dargestellte Aufblasöffnung vorgesehen.

Der in Fig. 5a gezeigte Hüllenteil 51besitzt außerdem zwei in seinem Innenbereich angeordnete Befestigungsabschnitte 54 mit der Form des Umrisses eines Knochens: Jeder Befestigungsabschnitt 54 verbreitert sich an seinem Ende zu einer Kreisform.

Die in Fig. 5b gezeigten beiden Luftsackteile 51, 52 werden nicht nur entlang des umlaufenden Befestigungsabschnitts 53 miteinander verbunden, sondern auch entlang zweier von einem Randbereich in den Innenbereich des vorderen Teils 51 ragender Befestigungsabschnitte 54'. Die beiden Befestigungsabschnitte 54' besitzen jeweils die Form eines halben Knochens und gehen an ihrer Unterseite in den umlaufenden Befestigungsabschnitt 53 über.

Die in den Fig. 5a und 5b gezeigten Befestigungsabschnitte 54, 54' ermöglichen eine Segmentierung des Luftsacks in einzelne Kammern, die ein Aufblähen des Luftsacks zu einer unerwünschten Breite verhindern. Durch die runde Form der Enden der Befestigungsabschnitte 54, 54', durch die geringe Krümmungsradien vermieden werden, werden an den Befestigungsabschnitten 54, 54' wirkende Kräfte derart verteilt, daß auch bei hoher Zug- oder Druckbelastung ein Aufreißen der Verbindung verhindert wird.

Die Herstellung der Verbindung der beiden Teile 51, 52 entlang der Befestigungsabschnitte 53 und 54 bzw. 54' kann durch das erfindungsgemäße Verfahren gleichzeitig während einer einzigen Verarbeitungsstufe erfolgen und ist somit besonders einfach.

### Bezugszeichenliste

- 11: Luftsackteil
- 12: Luftsackteil
- 13: Befestigungsabschnitt
- 14: Aufblasöffnung
- 15: Verbindungsabschnitt
- 16: Rückseite
- 21: Luftsackteil
- 22: Luftsackteil
- 23: Luftsackteil
- 24: Befestigungsabschnitt
- 25: Verbindungsabschnitt
- 26: Befestigungsabschnitt
- 27: Verbindungsabschnitt
- 28: Volumenbereich
- 31: Luftsackteil
- 32: Luftsackteil
- 33: oberer Befestigungsabschnitt
- 33': paralleler Befestigungsabschnitt
- 34: oberer Verbindungsabschnitt
- 34': paralleler Verbindungsabschnitt
- 35: oberer Volumenabschnitt
- 35': schmaler Volumenabschnitt
- 35'': unterer Volumenabschnitt
- 36: oberer Volumenbereich
- 36': Ersatz-Volumenbereich
- 36'': unterer Volumenbereich
- 41: Luftsackteil
- 42: Luftsackteil
- 43: umlaufender Befestigungsabschnitt
- 44: Befestigungsabschnitt
- 45: Flächenbereich
- 51: Luftsackteil
- 52: Luftsackteil
- 53: umlaufender Befestigungsabschnitt
- 54: Befestigungsabschnitt
- 54': Befestigungsabschnitt

## Patentansprüche

1. Verfahren zur Herstellung eines Luftsacks, der aus mehreren Luftsackteilen besteht und eine Luftsackhülle aufweist,
**dadurch gekennzeichnet,**
daß während einer Vorbereitungsstufe ein erster Luftsackteil zumindest an einem Befestigungsabschnitt mit einer Polyurethan-Beschichtung versehen wird, und
daß während einer Verarbeitungsstufe der Befestigungsabschnitt des ersten Luftsackteils mit einem Verbindungsabschnitt eines zweiten Luftsackteils in Kontakt gebracht wird und der erste Luftsackteil durch Erwärmung der Polyürethan-Beschichtung seines Befestigungsabschnitts mit dem zweiten Luftsackteil entlang dessen Verbindungsabschnitts verbunden wird.

2. Verfahren nach Anspruch 1,
**dadurch gekennzeichnet,**
daß die Luftsackhülle aus dem ersten Luftsackteil und dem zweiten Luftsackteil gebildet wird und/oder daß der erste Luftsackteil und der zweite Luftsackteil Teile eines einzigen Abschnitts der Luftsackhülle sind.

3. Verfahren nach Anspruch 1,
**dadurch gekennzeichnet,**
daß der erste Luftsackteil als ein Verbindungsband und der zweite Luftsackteil als ein Abschnitt der Luftsackhülle ausgebildet ist.

4. Verfahren nach Anspruch 3,
**dadurch gekennzeichnet,**
daß während der Vorbereitungsstufe das Verbindungsband an einem weiteren Befestigungsabschnitt mit einer Polyurethan-Beschichtung versehen wird, und
daß während der Verarbeitungsstufe dieser weitere Befestigungsabschnitt des Verbindungsbandes mit einem Verbindungsabschnitt eines dritten Luftsackteils in Kontakt gebracht wird und
das Verbindungsband durch Erwärmung der Polyurethan-Beschichtung seines weiteren Befestigungsabschnitts mit dem dritten Luftsackteil entlang dessen Verbindungsabschnitts verbunden wird.

5. Verfahren nach Anspruch 4,
**dadurch gekennzeichnet,**
daß der dritte Luftsackteil als ein Abschnitt der Luftsackhülle ausgebildet ist, wobei der dritte Luftsackteil und der zweite Luftsackteil insbesondere Teile eines einzigen Abschnitts der Luftsackhülle sind.

6. Verfahren nach einem der Ansprüche 3 bis 5,
**dadurch gekennzeichnet,**
daß das Verbindungsband einen im wesentlichen runden Querschnitt aufweist, wobei jeweils ein Befestigungsabschnitt sich entlang des Verbindungsbandes an einer von zwei im wesentlichen gegenüberstehenden Querschnitts-Außenseiten erstreckt, und/oder
daß das Verbindungsband einen im wesentlichen U-förmigen Querschnitt aufweist, wobei jeweils ein Befestigungsabschnitt sich entlang der Länge des Verbindungsbandes an der Außenseite eines der beiden Schenkel erstreckt.

7. Verfahren nach einem der Ansprüche 3 bis 5,
**dadurch gekennzeichnet,**
daß das Verbindungsband als ein flaches Band ausgebildet ist, wobei jeweils ein Befestigungsabschnitt sich entlang des Bandes an einer der beiden Seiten des Bandes erstreckt.

8. Verfahren nach einem der vorherigen Ansprüche,
**dadurch gekennzeichnet,**
daß während der Vorbereitungsstufe die Luftsackteile jeweils an ihrem Verbindungsabschnitt mit einer Polyurethan-Beschichtung versehen werden und/oder daß während der Vorbereitungsstufe die Luftsackteile jeweils derart mit einer Polyurethan-Beschichtung versehen werden, daß zumindest die gesamte Innenseitenfläche des fertigen Luftsacks die Polyurethan-Beschichtung aufweist und/oder
daß während der Vorbereitungsstufe die Luftsackteile jeweils zumindest an der Seite, welche den Befestigungsabschnitt bzw. den Verbindungsabschnitt aufweist, ganzflächig mit einer Polyurethan-Beschichtung versehen werden.

9. Verfahren nach einem der vorherigen Ansprüche,
**dadurch gekennzeichnet,**
daß die Erwärmung der Polyurethan-Beschichtung eines Befestigungsabschnittes durch direkten Wärmeübertrag, insbesondere Wärmeleitung oder Übertrag von Wärmestrahlung, durch Ultraschall-Erwärmung und/oder durch dielektrische Erwärmung erfolgt und/oder daß während der Erwärmung der Polyurethan-Beschichtung eines Befestigungsabschnittes gleichzeitig ein Druck auf den Befestigungsabschnitt und den zugehörigen Verbindungsabschnitt ausgeübt wird und/oder daß die Luftsackteile aus einem synthetischen Gewebematerial aufgebaut sind, insbesondere aus Polyamid, Nylon PA66, Nylon PA46 oder Polyester.

10. Luftsack, der aus mehreren Luftsackteilen (31, 32) besteht, eine Luftsackhülle aufweist und insbesondere durch ein Verfahren nach einem der Ansprüche 1 bis 9 hergestellt ist,
**dadurch gekennzeichnet,**
daß zwei Luftsackteile (31, 32), insbesondere zwei Teile (31, 32) der Luftsackhülle, entlang wenigstens zweier Verbindungsabschnitte (34') miteinander verbunden sind, die zumindest bereichsweise beabstandet voneinander im wesentlichen parallel zueinander verlaufen,
wobei die Verbindung der Luftsackteile (31, 32) entlang eines ersten Verbindungsabschnitts (34'), der einen aufzublasenden Bereich (36, 36'') gegenüber einem weiteren Verbindungsabschnitt (34') abgrenzt, eine geringere Festigkeit aufweist als die Verbindung entlang eines Verbindungsabschnitts (34'), der den ersten Verbindungsabschnitt (34') gegenüber einem Randbereich des Luftsacks oder gegenüber einer weiteren Verbindung (34') geringer Festigkeit abgrenzt, und wobei die im wesentlichen parallel verlaufenden Verbindungsabschnitte insbesondere jeweils entlang einer geschlossenen Bahn verlaufen.

11. Luftsack, der durch ein Verfahren nach einem der Ansprüche 1 bis 9 hergestellt ist,
**dadurch gekennzeichnet,**
daß wenigstens ein Verbindungsabschnitt entlang einer geschlossenen Bahn, insbesondere entlang einer im wesentlichen kreisförmigen geschlossenen Bahn, verläuft.

12. Luftsack, der aus mehreren Luftsackteilen (51, 52) besteht, eine Luftsackhülle aufweist und insbesondere durch ein Verfahren nach einem der Ansprüche 1 bis 9 hergestellt ist,
**dadurch gekennzeichnet,**
daß zwei Luftsackteile (51, 52), insbesondere zwei Teile der Luftsackhülle, entlang eines Verbindungsabschnitts miteinander verbunden sind, der im wesentlichen die Form eines Knochen oder eines Knochenendes aufweist.
